# EUROPÄISCHE PATENTSCHRIFT

(11) **EP 3 725 699 B1**
(45) Veröffentlichungstag und Bekanntmachung des Hinweises auf die Patenterteilung: **31.03.2021**
(21) Anmeldenummer: 19169584.0
(22) Anmeldetag: 16.04.2019
(51) Int. Cl.: B65D 19/38, F16B 7/04, F16B 2/22

(54) **LAGERUNGS- UND TRANSPORTELEMENT, INSBESONDERE PALETTE, ZUR LAGERUNG UND ZUM TRANSPORT VON GÜTERN**
STORAGE AND TRANSPORT ELEMENT, IN PARTICULAR PALLET, FOR THE STORAGE AND TRANSPORT OF GOODS
ÉLÉMENT DE STOCKAGE ET DE TRANSPORT, EN PARTICULIER PALETTE, DESTINÉ AU STOCKAGE ET AU TRANSPORT DE MARCHANDISES

(43) Veröffentlichungstag der Anmeldung: 21.10.2020
(73) Patentinhaber: FRAUNHOFER-GESELLSCHAFT zur Förderung der angewandten Forschung e.V., 80686 München (DE); WIE GmbH, 73560 Böbingen/Rems (DE)
(72) Erfinder: LANGE, Volker Dr., 44227 Dortmund (DE); WOHLFAHRT, Andreas, 44227 Dortmund (DE); BRANDT, Michael, 28816 Stuhr (DE); DÖLTGEN, Martin, 33378 Rheda-Wiedenbrück (DE); WIEDMANN, Dietmar, 73560 Böbingen/Rems (DE)
(74) Vertreter: Pfenning, Meinig & Partner mbB

(56) Entgegenhaltungen:
- WO-A1-2013/117569
- DE-U1-202004 007 493
- FR-A5- 2 157 171
- GB-A- 1 146 572
- SU-A1- 611 812
- US-A- 5 291 633

## Beschreibung

Die Erfindung liegt auf dem Gebiet der Logistik und des Maschinenbaus und ist mit besonderem Vorteil bei der Gestaltung von Paletten verschiedener Größen anwendbar.

Zum Transport und zur Lagerung vieler Güter haben sich im Rahmen der Optimierung der Logistik Lagerungs- und Transportelemente, insbesondere Paletten oder Normbehälter, beispielsweise Gitterboxen, im Gebrauch durchgesetzt, auf oder in denen die Güter abgelegt werden und mit denen sie bewegt werden können. Exemplarisch ist dabei die weitverbreitete sogenannte Europalette, die üblicherweise aus Holz besteht und eine Grundfläche von 1200 × 800 mm aufweist.

Es sind, insbesondere im Konsumgüterbereich, sogenannte Halb- und Viertelpaletten aus Holz oder Kunststoff bekannt geworden, die geringere Abmessungen aufweisen und eine verringerte Kapazität haben, jedoch einfacher handhabbar sind. Beispielsweise kann es geboten sein, zu verkaufende Güter auf einer Verkaufsfläche in kleineren Einheiten als einer Vollpalette zu präsentieren.

Die Handhabung einer größeren Anzahl von verschieden großen Paletten oder Behältern stellt für Transport und Lagerung bei der Optimierung eine Herausforderung dar. Um die Handhabung zu standardisieren und auch für die Lagerung jeweils gleich große Einheiten zu bilden, werden in der Praxis beispielsweise oft mehrere kleine Paletten auf einer großen Palette gelagert. Dies erfordert zusätzliche Handlingvorgänge und bedingt Raumverluste dadurch, dass die nutzbare Packhöhe durch Verwendung mehrerer Paletten übereinander reduziert ist. Die Handhabung von Paletten, deren Größe grundsätzlich variiert, stellt jedenfalls an die Planung und an die einsetzbaren Maschinen besondere Herausforderungen.

Aus WO 2013/117569 A1 ist ein Lagerungs- und Transportbehälter bekannt, der mittels einer schwenkbar gelagerten Befestigungsklammer mit einem weiteren Lagerungs- und Transportbehälter verbunden werden kann, wobei die Befestigungsklammer derart ausgebildet ist, dass ein Eckpfosten des weiteren Behälters umgriffen wird.

Weitere Beispiele zusammensetzbarer Lagerungs- und Transportelemente sind in DE 20 2004 007 493 U1 und FR 2 157 171 A5 offenbart.

Um insgesamt eine verbesserte Handhabung und Logistik zu erlauben, stellt sich die vorliegende Erfindung die Aufgabe, ein System zu schaffen, mit dem Lagerungs- und Transportelemente, insbesondere Paletten oder Behälter, nach Bedarf teilbar und/oder zusammensetzbar sind.

Die Aufgabe wird gemäß der Erfindung durch ein Lagerungs- und Transportelement, insbesondere eine Palette, mit den Merkmalen des Patentanspruchs 1 gelöst. Die Patentansprüche 2 bis 9 beziehen sich auf mögliche Implementierungen der Erfindung. Der Patentanspruch 10 bezieht sich auf ein zusammengesetztes Lagerungs- und Transportelement, insbesondere eine Verbundpalette.

Demgemäß bezieht sich die Erfindung auf ein Lagerungs- und Transportelement, insbesondere eine Palette oder einen Behälter, zur Lagerung und/oder zum Transport von Gütern mit einer Tragplattform an seiner Oberseite und einem mit der Tragplattform verbundenen Unterbautragwerk, wobei das Unterbautragwerk jeweils wenigstens zwei Befestigungsstreben, deren Längsachsen senkrecht zur Oberfläche der Tragplattform verlaufen, an einer oder mehreren Seitenflächen des Lagerungs- und Transportelements aufweist, wobei an den Befestigungsstreben jeweils eine Befestigungsklammer zur Verbindung von Befestigungsstreben mit weiteren Befestigungsstreben eines benachbarten Lagerungs- und Transportelements schwenkbar gelagert ist, wobei jede der Befestigungsklammern jeweils einen schwenkbaren Arm mit einem Klemmelement aufweist, das dazu eingerichtet ist, in einer Befestigungsposition im ausgeschwenkten Zustand des Arms eine weitere Befestigungsstrebe eines benachbarten Lagerungs- und Transportelements wenigstens teilweise zu umgreifen und wobei die Befestigungsklammern jeweils ein hülsenförmiges oder torusförmiges Ende aufweisen, das je eine Befestigungsstrebe umgibt.

Lagerungs- und Transportelemente können beispielsweise Paletten oder Behälter, insbesondere kastenförmige oder quaderförmige Behälter, beispielsweise Gitterboxen, sein.

Üblicherweise weist ein Behälter oder eine Palette an der Bodenfläche bzw. Oberseite, d. h. an der im Gebrauch zur Aufnahme von Gütern bestimmten Fläche, eine Tragplattform auf, die oft aus einer Mehrzahl von parallel zueinander verlaufenden länglichen rechteckigen Brettern, üblicherweise aus Holz, besteht und die eine Oberfläche bildet, auf der Güter abgestellt und gelagert werden können. Die Tragplattform kann auch durch ein einziges flaches Bauelement in Form einer Holzplatte oder einer Platte aus einem anderen geeigneten Material gebildet sein.

Die Tragplattform ruht auf einem Unterbautragwerk, das üblicherweise eine Mehrzahl von säulenartigen Elementen, beispielsweise in Form von stehenden Vierkanthölzern, aufweist, die gemeinsam die Tragplattform tragen. Üblicherweise sind wenigstens sechs, neun oder zwölf solcher säulenartigen Elemente vorgesehen, auf denen der äußere Rand der Tragplattform ruht oder die die Tragplattform entlang einer mittleren Symmetrielinie stützen.

Die säulenartigen Elemente/Vierkanthölzer sind üblicherweise an ihren der Tragplattform gegenüberliegenden Enden durch flache, plattenförmige Bauelemente, insbesondere Holzbretter oder Stabilisierungsbretter, miteinander verbunden, die die Konstruktion versteifen und stabilisieren.

Derartige Lagerungs- und Transportelemente, insbesondere Behälter und Paletten, können jeweils paarweise zu größeren Lagerungs- und Transportelementen zusammensetzbar oder in Paare von Halbelementen, beispielsweise Halbpaletten, teilbar sein. Das Problem bei der Konstruktion solcher zusammensetzbarer Halb- oder Teilelemente besteht darin, dass diese zu Lagerungs- und Transportelementen dauerhaft, zuverlässig und tragfähig zusammengesetzt werden müssen. Das Zusammensetzen und Auseinandernehmen mehrerer Halb- oder Teilelemente muss zudem in möglichst einfacher Weise möglich sein, ebenso wie das Zusammenbauen mehrerer Lagerungs- und Transportelemente. Zu diesem Zweck sind gemäß der Erfindung Befestigungsklammern vorgesehen, die jeweils zwei benachbarte Lagerungs-und Transportelemente, insbesondere Paletten, zusammenhalten können. Die Befestigungsklammern sind jeweils an Befestigungsstreben eines ersten Lagerungs- und Transportelements schwenkbar befestigt und können mit ihrem schwenkbaren Arm so zu einer weiteren Befestigungsstrebe eines benachbarten Lagerungs- und Transportelements herumgeschwenkt werden, dass ein jeweils an einem schwenkbaren Arm einer Befestigungsklammer vorgesehenes Klemmelement die weitere Befestigungsstrebe des benachbarten Lagerungs- und Transportelements umgreift. Dadurch werden die beiden benachbarten Lagerungs- und Transportelemente zuverlässig zusammengehalten. Sind entlang der aneinander angrenzenden Seitenflächen der zu verbindenden Lagerungs- und Transportelemente mehrere solcher Befestigungsstreben mit Befestigungsklammern vorgesehen, so wird durch Befestigung der Befestigungsklammern die Verbindung der Lagerungs- und Transportelemente nachhaltig stabilisiert.

Die Befestigungsstreben können jeweils zusätzlich zu den säulenartigen Elementen/Vierkanthölzern vorgesehen sein oder diese wenigstens teilweise ersetzen. Es können auch Ausnehmungen an den säulenartigen Elementen/ Vierkanthölzern vorgesehen sein, in die die Befestigungsstreben einsetzbar sind. Vorteilhaft sind die Befestigungsstreben jeweils einerseits an der Tragplattform und andererseits an den an der Unterseite des Lagerungs- und Transportelements vorgesehenen Stabilisierungsbrettern befestigt.

Eine vorteilhafte Ausgestaltung der Erfindung kann vorsehen, dass die Befestigungsklammer(n) als gebogene Flachmetall- oder Blechelemente, insbesondere mit einer Beschichtung, ausgebildet ist/sind. Die Befestigungsklammern lassen sich kostengünstig aus einem Flachmetall oder Blechmaterial durch Biegen oder sonstige Formbearbeitung herstellen; es ist jedoch auch eine Formung der Befestigungsklammern als Kunststoffteile, beispielsweise durch Gießen oder Spritzgießen, oder eine Herstellung aus Metall durch Metallguss möglich.

Zur besseren Handhabung und zum Schutz gegen Korrosion und Beschädigung können die Flachmetall- oder Blechelemente beispielsweise mit einer Kunststoffschicht beschichtet sein. Die Elemente können auch wenigstens abschnittsweise mit einer Elastomerschicht versehen sein, um die Klemmverbindung möglichst mit einer erhöhten Reibung auszubilden und somit die Befestigung von zwei Lagerungs- und Transportelementen aneinander zu stabilisieren. Insbesondere im Bereich einer Haltefläche, die im Befestigungszustand an einer Strebe eines benachbarten Lagerungs- und Transportelements anliegt, kann eine Befestigungsklammer vorteilhaft mit einem Elastomer beschichtet sein.

Es kann vorteilhaft auch vorgesehen sein, dass das Klemmelement / die Klemmelemente als Haken ausgebildet ist/sind. Damit ergeben sich vorteilhafte Selbsthaltekräfte der Befestigungsklammern und Klemmelemente, sobald eine Verbindung zwischen zwei Lagerungs- und Transportelementen einmal hergestellt ist. Die als Haken ausgebildeten Klemmelemente und/oder die Befestigungsklammern insgesamt können derart elastisch ausgebildet sein, dass sie unter elastischer Verformung jeweils auf zwei benachbarte Befestigungsstreben aufsetzbar sind und diese elastisch zusammenhalten. Sie müssen dabei jedoch eine ausreichende Festigkeit aufweisen, um die notwendigen Kräfte aufzubringen. Die elastische Verformbarkeit ist damit eng begrenzt.

Erfindungsgemäß ist vorgesehen, dass die Befestigungsklammern jeweils ein hülsenförmiges oder torusförmiges Ende aufweisen, das je eine Befestigungsstrebe umgibt. Auf diese Weise wird in einfacher Form an den Befestigungsklammern ein Schwenkgelenk ausgebildet, das durch jeweils eine Befestigungsstrebe und einen diese umgebenden Torus / eine diese umgebende Hülse einer Befestigungsklammer gebildet ist. Eine an einer Befestigungsklammer gebildete Hülse muss dabei keine volle zylindrische Hülse bilden, sondern kann auch ein Zylindersegment bilden, das eine Strebe zu weniger als 360°, beispielsweise jedoch mindestens zu 270° umgibt.

Eine weitere Implementierung kann vorsehen, dass die Befestigungsklammer(n) jeweils am freien Ende des schwenkbaren Armes als Klemmelement einen hakenartig abgebogenen, insbesondere gekrümmten Halteabschnitt mit einer der Schwenkachse zugewandten Haltefläche aufweist/ aufweisen. Auf diese Weise lässt sich eine Befestigungsklammer in einfacher Weise durch Biegen eines Flachmaterials oder beispielsweise durch Gießen eines Kunststoffmaterials herstellen. Die Haltefläche ist dafür vorgesehen, im Befestigungszustand auf einer Befestigungsstrebe aufzuliegen, während das dem Klemmelement gegenüberliegende Ende der Befestigungsklammer schwenkbar an einer weiteren Befestigungsstrebe eines benachbarten Lagerungs- und Transportelements befestigt ist.

Es kann auch vorgesehen sein, dass die Befestigungsklammer(n) jeweils am freien Ende des schwenkbaren Armes eine Ausnehmung aufweist/aufweisen, deren Begrenzungsfläche eine der Schwenkachse zugewandte Haltefläche aufweist. In diesem Fall kann eine Befestigungsklammer einen Arm mit einem relativ großen Querschnitt aufweisen, der an einem schwenkbaren Ende eine Ausnehmung zur Aufnahme einer Befestigungsstrebe aufweist. Der Arm kann so um eine erste Befestigungsstrebe herum geschwenkt werden, dass die Ausnehmung im Befestigungszustand eine zweite Befestigungsstrebe aufnimmt. Die Randfläche/ Begrenzungsfläche der Ausnehmung ist so gestaltet und positioniert, dass sie an der Befestigungsstrebe anliegt und die beiden Befestigungsstreben in Richtung aufeinander zu drückt. Der Druck wird dabei durch die Haltefläche aufgebracht, die Teil der Randfläche ist, der Schwenkachse der Befestigungsklammer gegenüberliegt und dieser zugewandt ist.

Dabei kann weiter vorteilhaft vorgesehen sein, dass die Haltefläche(n) wenigstens abschnittsweise senkrecht zur Verbindungslinie zwischen der Haltefläche und der Schwenkachse der Befestigungsklammer steht/stehen.

Erfindungsgemäß ist vorgesehen, dass das Unterbautragwerk an einer oder mehreren Seitenflächen jeweils wenigstens zwei Befestigungsstreben aufweist, deren Längsachsen senkrecht zur Oberfläche der Tragplattform verlaufen und an denen jeweils eine Befestigungsklammer schwenkbar befestigt ist. Durch die Verwendung jeweils zweier, von einander beabstandeter Befestigungsstreben an jedem der zusammenzufügenden Lagerungs- und Transportelemente, insbesondere an zwei zusammenzufügenden Paletten, wird eine noch stabilere Befestigung der beiden Teilelemente/Teilpaletten aneinander erreicht. Hierzu sollen die jeweils zwei Befestigungsstreben eines Lagerungs- und Transportelements / einer Palette möglichst weit voneinander beabstandet sein, beispielsweise an benachbarten Ecken der Tragplattform eines Lagerungs- und Transportelements / einer Palette liegen.

Eine weitere mögliche Ausgestaltung kann vorsehen, dass das Unterbautragwerk an einer oder mehreren Seitenflächen jeweils wenigstens eine Befestigungsstrebe aufweist, deren Längsachse parallel zur Oberfläche der Tragplattform und parallel zu der jeweiligen Seitenfläche verläuft und an der jeweils eine Befestigungsklammer schwenkbar befestigt ist.

Es kann zudem vorgesehen sein, dass die Befestigungsstreben aus Metall bestehen und einen runden Querschnitt aufweisen. Insbesondere dann, wenn verschieden ausgerichtete Befestigungsstreben der zu verbindenden Paletten durch Befestigungsklammern miteinander verbunden sind, wird eine besonders stabile Verbindung erreicht.

Die Erfindung bezieht sich zudem auf ein Lagerungs- und Transportelement, insbesondere eine Palette, bei dem/der eine schwenkbare Sicherungsklammer vorgesehen ist, die an dem schwenkbaren Arm einer Befestigungsklammer angreift und diesen in seiner Befestigungsposition hält. Durch eine Sicherungsklammer wird eine Befestigungsklammer an einer Rückschwenkbewegung gehindert und somit im Befestigungszustand gesichert.

Letztlich bezieht sich die Erfindung auch auf ein Lagerungs- und Transportelement, insbesondere eine Verbundpalette, das/die sich dadurch auszeichnet, dass die Lagerungs- und Transportelemente/Paletten durch eine oder mehrere Befestigungsklammern miteinander verbunden sind.

Im Folgenden wird die Erfindung anhand von Ausführungsbeispielen in Figuren einer Zeichnung gezeigt und nachfolgend erläutert. Die Anwendung der Erfindung wird dabei stellvertretend für verschiedene Arten von Lagerungs- und Transportelementen, beispielsweise Paletten, kastenförmige Behälter oder Gitterboxen, anhand des Beispiels von Paletten dargestellt. Zur Übertragung auf Behälter oder Boxen sind gegebenenfalls Seitenwände auf der Tragplattform zu ergänzen. Dabei zeigt
- Fig. 1: in perspektivischer Ansicht eine aus zwei Teilpaletten zusammengesetzte Palette,
- Fig. 2: zwei zusammensetzbare Paletten in perspektivischer Ansicht,
- Fig. 3: die aneinander angrenzenden Bereiche zweiter zusammensetzbarer Paletten mit einem Verschlusssystem,
- Fig. 4: ein Verschlusssystem mit einer Befestigungsklammer im Detail in perspektivischer Ansicht,
- Fig. 5: in einer schematischen Draufsicht von der Oberseite die Klötze oder säulenartigen Elemente eines Unterbautragwerks,
- Fig. 6: die für die Befestigungsklammern zur Befestigung an benachbarten Paletten optimal nutzbaren Klötze einer Palette,
- Fig. 7: dunkel hervorgehoben bei zwei zusammengesetzten Paletten die jeweils zur Befestigung verwendbaren Klötze / säulenartigen Elemente,
- Fig. 8: in perspektivischer Darstellung eine Befestigungsklammer,
- Fig. 9: in perspektivischer Darstellung zwei Elemente mit stangenförmigen Befestigungsstreben, die jeweils in das Unterbautragwerk einer Palette einsetzbar sind,
- Fig. 10: in einer Draufsicht eine Befestigungsklammer,
- Fig. 11: in einer weiteren perspektivischen Darstellung eine Befestigungsklammer,
- Fig. 12: in einer Draufsicht vier Befestigungsstreben zweier benachbarter, zu verbindender Paletten mit einer Befestigungsklammer und einem Werkzeug,
- Fig. 13: die Verwendung eines Werkzeugs zum Öffnen einer Befestigungsklammer sowie
- Fig. 14: eine Befestigungsklammer mit einem massiven schwenkbaren Arm und einer Ausnehmung.

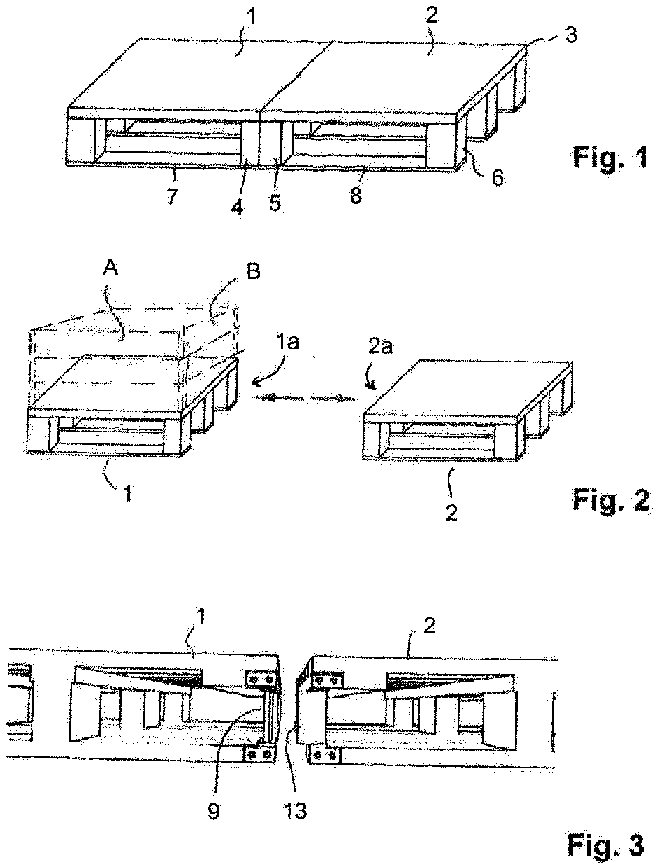

Figur 1 zeigt eine aus zwei Paletten 1, 2 zusammengesetzte Palette in perspektivischer Darstellung, wobei die zusammengesetzte Palette 1, 2 das Format einer sogenannten Europapalette aufweist. Die Tragplattform 3 ist üblicherweise durch ein oder mehrere Platten oder Bretter gebildet, die eine Abstellfläche für zu lagernde oder zu transportierende Güter bilden. Die Tragplattform 3 ruht auf einem Unterbautragwerk, das sogenannte Klötze oder säulenartige Tragelemente 4, 5, 6 aufweist, die mit der Tragplattform 3 fest verbunden sind. Zudem sind die Klötze 4, 5, 6 an ihren Unterseiten mittels Verbindungselementen, beispielsweise Brettern 7, 8, verbunden. Hierdurch wird insgesamt eine tragfähige Konstruktion erreicht, die zudem im Unterbautragwerk Öffnungen zum Eingreifen von Gabelzinken eines Gabelstaplers zum Anheben und Transportieren einer solchen Palette aufweist. In vielen Fällen sind derartige Paletten aus Holz hergestellt; es sind jedoch auch andere Materialien, wie beispielsweise Kunststoff oder Pappe, zur Verwendung bekannt geworden.

In Figur 2 sind zwei Paletten 1, 2 getrennt voneinander dargestellt, die jeweils die halbe Größe der zusammengesetzten Palette aufweisen und die zusammengesetzt und miteinander verbunden werden sollen. Hierzu sollen die beiden Paletten 1, 2 im Bereich ihrer aneinander angrenzenden Seitenflächen 1a, 2a miteinander verbunden werden. Soll die Anwendung der Erfindung auf kastenförmige Behälter realisiert werden, so sind oberhalb der Tragplattform 3 Seitenwände A, B zu ergänzen, die in Figur 2 beispielhaft gestrichelt dargestellt sind.

In Figur 3 ist in einer perspektivischen Ansicht die Zusammenstellung aus einer ersten Palette 1 und einer zweiten Palette 2 dargestellt, wobei jeweils die Tragplattform mit einem Klötze aufweisenden Unterbautragwerk gezeigt ist. In das Unterbautragwerk integriert sind sowohl bei der ersten Palette 1 als auch bei der zweiten Palette 2 jeweils Befestigungsstreben 9, die anstelle der oder zusätzlich zu den säulenförmigen Tragelementen/Klötzen einer Palette eingesetzt sind. Es ist eine Befestigungsklammer 13 an der zweiten Palette 2 dargestellt, die dazu vorgesehen ist, die beiden Paletten 1, 2 miteinander zu verbinden.

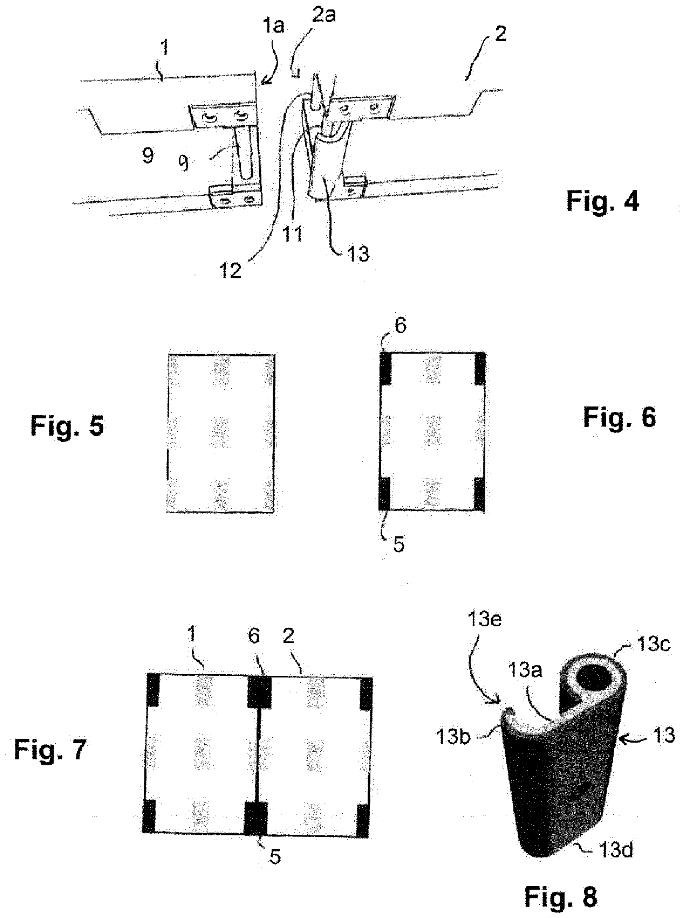

In Figur 4 ist die Verbindungsanordnung im Bereich der aneinander angrenzenden Seitenflächen 1a, 2a der beiden Paletten 1, 2 perspektivisch im Detail dargestellt. Es sind die Befestigungsstrebe 9 der ersten Palette der ersten Palette sowie eine Befestigungsstrebe 11 der zweiten Palette 2 und eine weitere Befestigungsstrebe 12 der zweiten Palette 2 zu erkennen. Zudem ist die schwenkbare Befestigungsklammer 13 in dieser Figur gut zu erkennen. Die Befestigungsklammer 13, auf die weiter unten noch detaillierter eingegangen wird, ist um die Befestigungsstrebe 11 schwenkbar angeordnet und kann in einem eingeschwenkten Zustand innerhalb der Kontur des Unterbautragwerks der zweiten Palette 2 angeordnet werden, so dass sie über die äußeren Umrisse der zweiten Palette 2 nicht hinausragt. In einem Befestigungszustand kann sie so ausgeschwenkt werden, dass sie die Befestigungsstrebe 9 der ersten Palette 2 umgreift und somit die Befestigungsstrebe 11 der zweiten Palette 2 mit der Befestigungsstrebe 9 der ersten Palette 1 fest verbindet.

In Figur 5 sind bei einer Palette neun Klötze / säulenartige Tragelemente 4, 5, 6 schematisch beispielhaft von oben gesehen dargestellt.

In Figur 6 sind bei den analog zur Figur 5 dargestellten Klötzen die an den Ecken der Palette angeordneten Klötze 5, 6 hervorgehoben. Diese können vorteilhaft zur Verbindung mit Klötzen von benachbarten Paletten dienen, d. h., in diesem Bereich können die jeweiligen Klötze durch Konstruktionseinheiten mit Befestigungsstreben, wie sie in Figur 4 dargestellt sind, ersetzt oder ergänzt werden.

In Figur 7 sind zwei zusammengesetzte Paletten 1, 2 dargestellt, wobei die jeweils miteinander verbundenen oder verbindbaren Klötze oder Klotzpositionen im Bereich der aneinander angrenzenden Seitenflächen dunkel hervorgehoben sind.

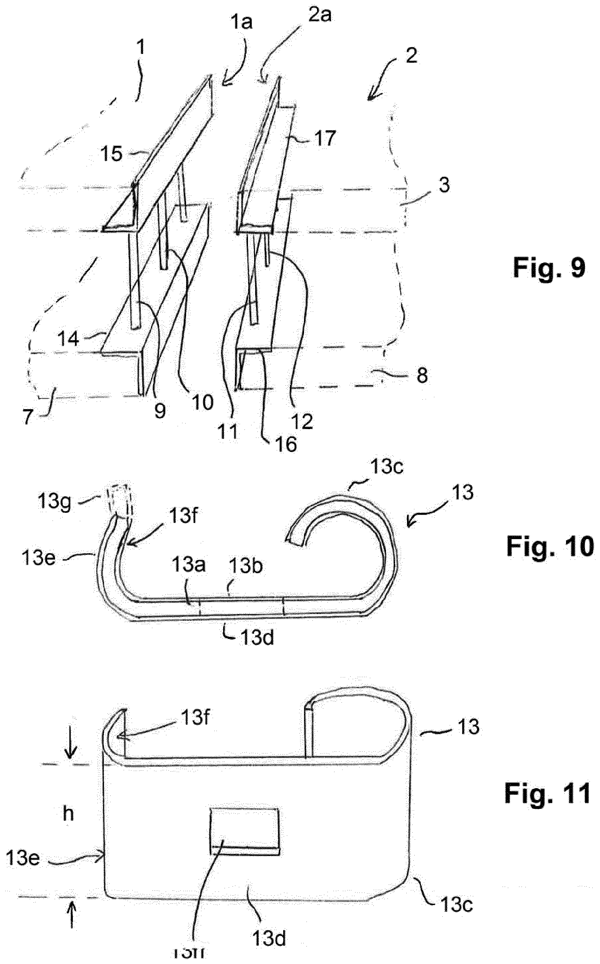

Figur 8 zeigt in einer perspektivischen Darstellung eine Ansicht einer Befestigungsklammer 13. Diese ist schematisch dargestellt und kann in der dargestellten Form beispielsweise als Metallgusselement oder Kunststoffgusselement hergestellt oder auch aus einem Flachmaterial 13a gebogen werden. Die Befestigungsklammer weist in der Ansicht eine Beschichtung 13b auf, die beispielsweise aus einem Kunststoff, z. B. einem Lack oder einer Pulverbeschichtung, bestehen kann. Die Befestigungsklammer 13 weist einen torus- oder hülsenförmigen Bereich 13c, einen schwenkbaren Arm 13d sowie ein Klemmelement 13e auf. Der torus- oder hülsenförmige Bereich 13c umgibt eine Befestigungsstrebe 11, so dass der schwenkbare Arm 13d um die Befestigungsstrebe 11 schwenkbar ist und das Klemmelement 13e sich um eine weitere Befestigungsstrebe 9 herumlegen und diese in Richtung zur ersten Befestigungsstrebe 11 drücken kann. Weitere Einzelheiten zur Befestigungsklammer werden bei der Beschreibung der Figuren 10 und 11 angeführt.

In Figur 9 ist in perspektivischer Darstellung schematisch der Randbereich 1a einer ersten Palette 1 gemeinsam mit dem Randbereich 2a einer zweiten Palette 2 dargestellt. Es sind Befestigungsstreben 9, 10, 11, 12 gezeigt, die im Bereich von Tragklötzen der beiden Paletten 1, 2 in deren Randbereich entweder zusätzlich zu einem Klotz oder anstelle eines Klotzes eingesetzt sind. Bei Anbringung zusätzlich zu einem Klotz muss dieser entsprechend mit einer Ausnehmung versehen werden. Die Befestigungsstreben 9, 10, 11, 12 sind jeweils mit L-förmigen Schienen 14, 15, 16, 17 fest verbunden, die an der gestrichelten dargestellten Tragplattform 3 einerseits oder an Verbindungselementen 7, 8 des Unterbautragwerks andererseits befestigt sind. Die Verbindungen können beispielsweise durch Verschrauben, Vernieten oder Verklammern sowie Nageln oder auch durch eine Klebeverbindung hergestellt sein. Die Befestigungsstreben 9, 10, 11, 12 können mit den Schienen 14, 15, 16, 17 beispielsweise verschweißt oder verschraubt sein.

In Figur 10 ist eine Draufsicht auf eine Befestigungsklammer 13 gezeigt, die aus einem Flachmaterial gebogen ist, wobei das Flachmaterial mit 13a und eine Beschichtung mit 13b bezeichnet ist. An einem Ende weist die Befestigungsklammer 13 eine gebogene Hülse 13c auf, die im Querschnitt etwa einen Dreiviertel-Kreisring bildet. In der Hülse 13c ist eine etwa runde oder zylindrische Öffnung gebildet, die eine Befestigungsstrebe 11 aufnimmt, so dass die Befestigungsklammer 13 um die Befestigungsstrebe 11 herum schwenkbar ist. Der schwenkbare Arm ist mit 13d bezeichnet, und das Klemmelement, das eine Hakenform aufweist, mit 13e. Das Klemmelement 13e hat eine Haltefläche 13f, die dem hülsenförmigen Teil 13c der Befestigungsklammer zugewandt ist und die im Befestigungszustand an einer zweiten Strebe 9 anliegt, die mit der ersten Strebe 11 zu verbinden ist. Im Bereich der Haltefläche 13f ist das Klemmelement 13e konkav gekrümmt, um sich an die runde, beispielsweise zylinderförmige Kontur der zweiten Befestigungsstrebe 9 anzuschmiegen. Optional kann die Befestigungsklammer 13 am Ende des Klemmelements 13e noch einen, in Figur 10 gestrichelt dargestellten Einlaufansatz 13g aufweisen, der so gestaltet ist, dass beim Schwenken der Befestigungsklammer eine Einlauffläche zuerst mit der Befestigungsstrebe 9 in Verbindung kommt, so dass gegebenenfalls das Klemmelement 13e ein kleines Stück weit elastisch aufgebogen wird, um im Befestigungszustand die Befestigungsstrebe 9 elastisch an die Befestigungsstrebe 11 zu drücken. Die elastische Verformbarkeit der Befestigungsklammer 13 ist dabei gering, da die Klammer zum Zusammenhalten der beiden Paletten 1, 2 große Kräfte aufbringen muss.

In Figur 11 ist die Befestigungsklammer in einer Strichzeichnung in perspektivischer Darstellung gezeigt. Die Höhe h der Befestigungsklammer 13 kann beispielsweise wenigstens der Hälfte der Höhe der Palette oder wenigstens zwei Drittel der Höhe der Palette entsprechen. Auf der rechten Seite liegt das Ende der Befestigungsklammer 13, das zu einer Hülse 13c geformt ist, die beispielsweise wenigstens 270 Grad eines Volltorus oder wenigstens 300 Grad oder 340 Grad eines Volltorus bildet. Auf der linken Seite ist das Klemmelement 13e gezeigt, das als hakenartige Abbiegung des Flachmaterials ausgeführt ist, wobei die Krümmung dieses Klemmelements in der Draufsicht konkav ist, so dass die Haltefläche 13f als konkave Fläche dem hülsenförmigen Ende 13c gegenüberliegt.

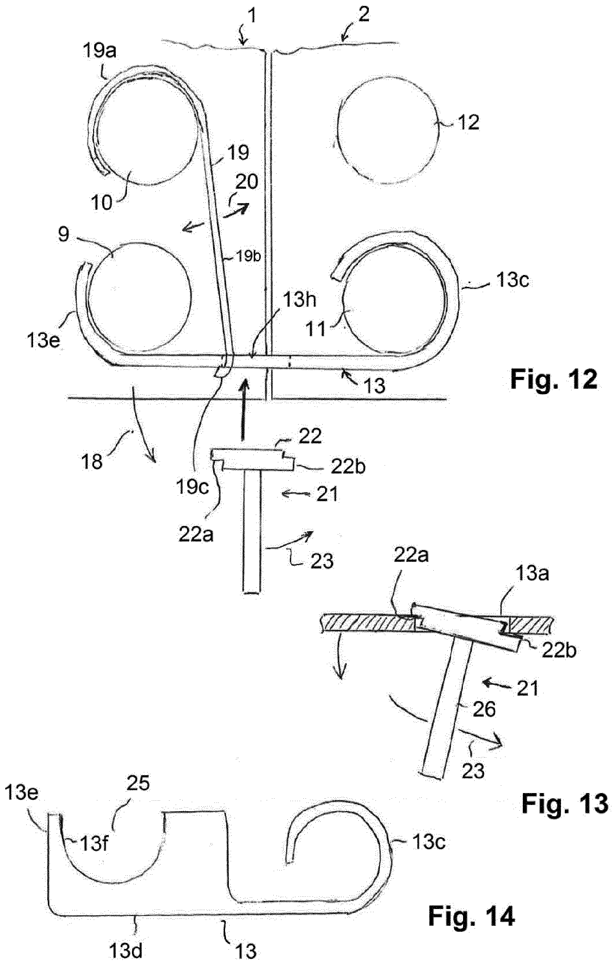

Die Befestigungsklammer 13 weist eine durchgehende fensterartige Ausnehmung oder Öffnung 13h auf, in die ein Werkzeug zum Ein- und Ausschwenken der Befestigungsklammer 13 eingreifen kann. Zudem dient der Rand der Ausnehmung 13h dem Halten der Befestigungsklammer in der Befestigungsposition mittels einer Sicherungsklammer. Die Sicherungsklammer wird weiter unten in Verbindung mit Figur 12 näher erläutert.

Figur 12 zeigt in einer Draufsicht schematisch einen Ausschnitt von zwei einander benachbarten Paletten 1, 2, die zu einer zusammengesetzten Palette zusammengesetzt sind. In den Randbereichen der Paletten 1, 2 sind die Befestigungsstreben 9, 10, 11, 12, in Form von runden Eisenstangen, dargestellt. Eine Befestigungsklammer 13 ist mit ihrem hülsenartigen oder torusförmigen Ende 13c um die Befestigungsstrebe 11 herumgelegt und auf dieser gehalten, so dass die Befestigungsklammer 13 um die Befestigungsstrebe 11 herum in Richtung des Pfeils 18 schwenkbar ist. Die Befestigungsklammer 13 ist in der Befestigungsposition dargestellt, in der das Klemmelement 13e um die Befestigungsstrebe 9 herumgelegt ist und diese in Richtung der Befestigungsstrebe 11 drückt. Damit werden die beiden Paletten 1, 2 ebenfalls gegeneinander gedrückt.

Das hakenförmige Klemmelement 13e kann so weit um die Befestigungsstrebe 9 herumreichen, dass die Krümmung des Klemmelements 13e ein unbeabsichtigtes Zurückschwenken der Befestigungsklammer 13 aus der Befestigungsposition verhindert. Alternativ oder zusätzlich kann auch, wie in Figur 12 dargestellt, eine Sicherungsklammer 19 vorgesehen sein, die ein hülsenartiges Ende 19a aufweist, welches die Befestigungsstrebe 10 umgibt, so dass die Sicherungsklammer 19 um die Befestigungsstrebe 10 herum schwenkbar angeordnet ist. Der schwenkbare Arm 19b ist, wie in Figur 12 dargestellt, in Richtung des Pfeils 20 schwenkbar. In der dargestellten Sicherungsposition greift ein Sicherungshaken 19c am Ende der Sicherungsklammer 19 durch das Fenster 13h in der Befestigungsklammer 13 hindurch und legt sich mit einer Hinterschneidung auf den Rand des Fensters 13h, so dass die Befestigungsklammer 13 in der Befestigungsposition gehalten wird und nicht von der Befestigungsstrebe 9 wegschwenken kann. Die Sicherungsfunktion der Sicherungsklammer 19 wird durch ein Einschwenken der Sicherungsklammer in Richtung des Pfeils 20 aufgelöst.

Zum Lösen der Befestigungsklammer 13 kann ein hammerartiges Werkzeug 21 mit einem Hammerkopf 22 und einem Griff 26 so in das Fenster 13h hineingedrückt werden, dass das hakenartige Ende 19c der Sicherungsklammer 19 vom Rand des Fensters 13h entfernt und weggeschwenkt wird. Der Hammerkopf 22 kann dann mit einer Hinterschneidung 22a hinter den Rand des Fensters 13h greifen, und das Werkzeug kann in Richtung des Pfeils 23 geschwenkt werden. Das der Hinterschneidung 22a gegenüberliegende Ende 22b des Hammerkopfes 22 kann am gegenüberliegenden Rand des Fensters 13h abgestützt werden, so dass die Befestigungsklammer 13 in Richtung des Pfeils 18 durch Schwenken des Werkzeugs 21 in Richtung des Pfeils 23 geschwenkt werden kann. Damit kann die Befestigungsklammer geöffnet, um die Befestigungsstrebe 11 geschwenkt und damit von der Befestigungsstrebe 9 zum Auflösen des Palettenverbundes weggeschwenkt werden.

In Figur 13 ist das Angreifen des Werkzeugs 21 am Rand des Fensters 13h mit der Hinterschneidung 22a und dem gegenüberliegenden Ende 22b im Detail dargestellt.

In Figur 14 ist eine Befestigungsklammer 13 mit einem schwenkbaren Arm 13d dargestellt, der so breit ist, dass in ihm eine Ausnehmung 25, insbesondere in zylindrischer Form, angeordnet werden kann, die groß genug ist, um eine Befestigungsstrebe 9 aufzunehmen. Das Klemmelement 13e ist durch den Randbereich der Ausnehmung 25 gebildet, und eine Haltefläche 13f ist in der Begrenzungsfläche der Ausnehmung 25 gebildet.

Die erfindungsgemäße Palette lässt in einfacher Form eine Verbindung mit benachbarten Paletten mittels einer unverlierbaren, an einer Befestigungsstrebe dauerhaft angeschlagenen Befestigungsklammer zu, die in der Lage ist, zwei benachbarte Paletten mit großer Kraft zusammenzuhalten. Gegen eine unbeabsichtigte Entfernung der Befestigungsklammer ist diese vorteilhaft mittels einer Sicherungsklammer zuverlässig gehalten. Derartige Befestigungsklammern können zur Verbindung von zwei benachbarten Paletten wenigstens zweifach an verschiedenen Ecken der zu verbindenden Paletten vorgesehen sein. Es ist eine Herstellung der Palettenverbindung ebenso wie das Lösen der Verbindung mittels einfacher Werkzeuge ohne größeren Aufwand möglich.

## Patentansprüche

1. Lagerungs- und Transportelement (1,2), insbesondere Palette oder Behälter zur Lagerung und/oder zum Transport von Gütern, mit einer Tragplattform (3) an seiner Oberseite und einem mit der Tragplattform verbundenen Unterbautragwerk (4, 5, 6, 7, 8, 9, 10, 11, 12),
wobei das Unterbautragwerk jeweils wenigstens zwei Befestigungsstreben (9, 10, 11, 12), deren Längsachsen senkrecht zur Oberfläche der Tragplattform (3) verlaufen, an einer oder mehreren Seitenflächen (1a, 2a) des Lagerungs- und Transportelementes (1, 2) aufweist, wobei an den Befestigungsstreben jeweils eine Befestigungsklammer (13) zur Verbindung von Befestigungsstreben mit weiteren Befestigungsstreben eines benachbarten Lagerungs- und Transportelementes schwenkbar gelagert ist,
wobei jede der Befestigungsklammern (13) jeweils einen schwenkbaren Arm (13d) mit einem Klemmelement (13e) aufweist, das dazu eingerichtet ist, in einer Befestigungsposition im ausgeschwenkten Zustand des Arms eine weitere Befestigungsstrebe (9) eines benachbarten Lagerungs- und Transportelementes wenigstens teilweise zu umgreifen und
wobei die Befestigungsklammern (13) jeweils ein hülsenförmiges oder torusförmiges Ende (13c) aufweisen, das je eine Befestigungsstrebe (11) umgibt.

2. Lagerungs- und Transportelement nach Anspruch 1, wobei die Befestigungsklammern (13) als gebogene Flachmetall- oder Blechelemente (13a), insbesondere mit einer Beschichtung (13b), ausgebildet sind.

3. Lagerungs- und Transportelement nach Anspruch 1 oder 2, wobei das Klemmelement (13e) als Haken ausgebildet ist.

4. Lagerungs- und Transportelement nach einem der Ansprüche 1 bis 3, wobei die Befestigungsklammern (13) jeweils am freien Ende des schwenkbaren Armes (13d) als Klemmelement (13e) einen hakenartig abgebogenen, insbesondere gekrümmten Halteabschnitt mit einer der Schwenkachse zugewandten Haltefläche (13f) aufweisen.

5. Lagerungs- und Transportelement nach einem der Ansprüche 1 bis 3, wobei die Befestigungsklammern (13) jeweils am freien Ende des schwenkbaren Armes (13d) eine Ausnehmung (25) aufweisen, deren Begrenzungsfläche eine der Schwenkachse zugewandte Haltefläche (13f) aufweist.

6. Lagerungs-und Transportelement nach Anspruch 4 oder 5, wobei die Haltefläche (13f) wenigstens abschnittsweise senkrecht zur Verbindungslinie zwischen der Haltefläche und der Schwenkachse der Befestigungsklammer (13) steht.

7. Lagerungs- und Transportelement nach einem der Ansprüche 1 bis 6, wobei das Unterbautragwerk (4, 5, 6, 7, 8, 9, 10, 11, 12) an einer oder mehreren Seitenflächen (1a, 2a) jeweils wenigstens eine Befestigungsstrebe aufweist, deren Längsachse parallel zur Oberfläche der Tragplattform (3) und parallel zu der jeweiligen Seitenfläche (1a, 2a) verläuft und an der jeweils eine Befestigungsklammer (13) schwenkbar befestigt ist.

8. Lagerungs- und Transportelement nach einem der Ansprüche 1 bis 7, wobei die Befestigungsstreben (9, 10, 11, 12) aus Metall bestehen und einen runden Querschnitt aufweisen.

9. Lagerungs- und Transportelement nach einem der Ansprüche 1 bis 8, wobei eine schwenkbare Sicherungsklammer (19) vorgesehen ist, die an dem schwenkbaren Arm einer Befestigungsklammer (13) angreift und diesen in seiner Befestigungsposition hält.

10. Zusammengesetztes Lagerungs- und Transportelement, bestehend aus mehreren Lagerungs- und Transportelementen (1, 2), insbesondere Paletten, gemäß einem der Ansprüche 1 bis 9, wobei die Lagerungs- und Transportelemente (1, 2) durch eine oder mehrere Befestigungsklammern (13) miteinander verbunden sind.

## Claims

1. A storage and transport element (1, 2), in particular a pallet or container for storing and/or transporting goods, comprising a supporting platform (3) on the top side thereof and a substructure supporting framework (4, 5, 6, 7, 8, 9, 10, 11, 12) connected to the supporting platform,
the substructure supporting framework comprising in each case at least two fastening struts (9, 10, 11, 12), the longitudinal axes of which extend perpendicularly to the surface of the supporting platform (3), at one or more lateral surfaces (1a, 2a) of the storage and transport element (1, 2), a respective fastening bracket (13) for connecting fastening struts to further fastening struts of an adjacent storage and transport element being pivotably mounted at the fastening struts,
each of the fastening brackets (13) comprising a respective pivotable arm (13d) including a clamping element (13e), which is configured to at least partially embrace a further fastening strut (9) of an adjacent storage and transport element in a fastening position, when the arm is pivoted out, and
the fastening brackets (13) in each case having a sleeve-shaped or toroidal end (13c) that surrounds a respective fastening strut (11).

2. The storage and transport element according to claim 1,
wherein the fastening brackets (13) are designed as bent flat metal or sheet metal elements (13a), in particular comprising a coating (13b).

3. The storage and transport element according to claim 1 or 2,
wherein the clamping element (13e) is designed as a hook.

4. A storage and transport element according to any one of claims 1 to 3,
wherein the fastening brackets (13) in each case, at the free end of the pivotable arm (13d), comprise a hook-like bent, in particular curved, holding section including a holding surface (13f) that faces the pivot axis, serving as the clamping element (13e).

5. A storage and transport element according to any one of claims 1 to 3,
wherein the fastening brackets (13) in each case, at the free end of the pivotable arm (13d), include a recess (25), the boundary surface of which includes a holding section (13f) facing the pivot axis.

6. The storage and transport element according to claim 4 or 5,
wherein the holding surface (13f), at least in sections, is situated perpendicularly to the connecting line between the holding surface and the pivot axis of the fastening bracket (13).

7. A storage and transport element according to any one of claims 1 to 6,
wherein the substructure supporting framework (4, 5, 6, 7, 8, 9, 10, 11, 12), at one or more lateral surfaces (1a, 2a), in each case comprises at least one fastening strut, the longitudinal axis of which runs parallel to the surface of the supporting platform (3) and parallel to the respective lateral surface (1a, 2a), and to which a fastening bracket (13) is pivotably attached.

8. A storage and transport element according to any one of claims 1 to 7,
wherein the fastening struts (9, 10, 11, 12) are made of metal and have a round cross-section.

9. A storage and transport element according to any one of claims 1 to 8,
wherein a pivotable securing clip (19) is provided, which engages on the pivotable arm of an fastening bracket (13) and holds the arm in the fastening position thereof.

10. An assembled storage and transport element, comprising a plurality of storage and transport elements (1, 2), and in particular pallets, according to any one of claims 1 to 9,
wherein the storage and transport elements (1, 2) are connected to one another by one or more fastening brackets (13).

## Revendications

1. Elément de stockage et de transport (1, 2), en particulier, palette ou récipient pour le stockage et/ou le transport de produits, doté d'une plateforme support (3) sur son côté supérieur et d'une substructure portante (4, 5, 6, 7, 8, 9, 10, 11, 12), reliée avec la plateforme support,
dans lequel la substructure portante présente respectivement au moins deux entretoises de fixation (9, 10, 11, 12), dont les axes longitudinaux s'étendent perpendiculairement par rapport à la surface de la plateforme support (3), sur une ou plusieurs surfaces latérales (1a, 2a) de l'élément de stockage et de transport (1, 2), dans lequel une pince de fixation (13) est respectivement logée en pouvant pivoter sur les entretoises de fixation, permettant la liaison des entretoises de fixation avec d'autres entretoises de fixation d'un élément de stockage et de transport voisin,
dans lequel chacune des pinces de fixation (13) présente respectivement un bras (13d) pivotable avec un élément de serrage (13e), qui est prévu pour, dans une position de fixation à l'état pivoté du bras, se mettre en prise au moins partiellement avec une autre entretoise de fixation (9) d'un élément de stockage et de transport voisin, et
dans lequel les pinces de fixation (13) présentent respectivement une extrémité (13c) en forme de manchon ou en forme de tore qui entoure chaque fois une entretoise de fixation (11).

2. Elément de stockage et de transport selon la revendication 1,
dans lequel les pinces de fixation (13) sont conçues sous forme d'éléments en métal plat ou d'éléments en tôle (13a) recourbés, en particulier, pourvus d'un revêtement (13b).

3. Elément de stockage et de transport selon la revendication 1 ou la revendication 2,
dans lequel l'élément de serrage (13e) est conçu sous forme de crochet.

4. Elément de stockage et de transport selon l'une des revendications 1 à 3,
dans lequel les pinces de fixation (13) présentent respectivement à l'extrémité libre du bras (13d) pivotable un segment de serrage en forme de crochet, recourbé, en particulier incurvé, avec une surface de serrage (13f) orientée vers l'axe de pivotement, servant d'élément de serrage (13e).

5. Elément de stockage et de transport selon l'une des revendications 1 à 3,
dans lequel les pinces de fixation (13) présentent respectivement à l'extrémité libre du bras (13d) pivotable une cavité (25), dont la surface de délimitation présente une surface de serrage (13f) orientée vers l'axe de pivotement.

6. Elément de stockage et de transport selon la revendication 4 ou la revendication 5,
dans lequel la surface de serrage (13f) est positionnée verticalement par rapport à la ligne de liaison entre la surface de serrage et l'axe de pivotement de la pince de fixation (13), au moins par endroits.

7. Elément de stockage et de transport selon l'une des revendications 1 à 6,
dans lequel la substructure portante (4, 5, 6, 7, 8, 9, 10, 11, 12) présente respectivement au moins une entretoise de fixation sur ou plusieurs surfaces latérales (1a, 2a), dont l'axe longitudinal s'étend parallèlement par rapport à la surface de la plateforme support (3) et parallèlement par rapport à la surface latérale (1a, 2a) respective, et est fixé en pouvant pivoter sur respectivement une pince de fixation (13).

8. Elément de stockage et de transport selon l'une des revendications 1 à 7,
dans lequel les entretoises de fixation (9, 10, 11, 12) sont constituées de métal et présentent une section transversale ronde.

9. Elément de stockage et de transport selon l'une des revendications 1 à 8,
dans lequel une agrafe de sécurité (19) pivotable est prévue, qui se met en prise sur le bras pivotable d'une pince de fixation (13) et maintient celle-ci dans sa position de fixation.

10. Elément de stockage et de transport composé, constitué de plusieurs éléments de stockage et de transport (1, 2), en particulier de palettes, selon l'une des revendications 1 à 9,
dans lequel les éléments de stockage et de transport (1, 2) sont reliés les uns aux autres par une ou plusieurs pinces de fixation (13).
